# EUROPÄISCHE PATENTSCHRIFT

(11) **EP 1 857 244 B1**
(45) Veröffentlichungstag und Bekanntmachung des Hinweises auf die Patenterteilung: **28.03.2012**
(21) Anmeldenummer: 07007960.3
(22) Anmeldetag: 19.04.2007
(51) Int. Cl.: B29C 33/04, B22F 3/105

(54) **Gekühlter Formeinsatz für Spritzwerkzeuge**
Cooled mold insert for injection moulds
Insert de moule refroidi pour des moules à injection

(30) Priorität: 19.05.2006 DE 102006023849
(43) Veröffentlichungstag der Anmeldung: 21.11.2007
(73) Patentinhaber: Werkzeugbau Siegfried Hofmann GmbH, 96215 Lichtenfels (DE)
(72) Erfinder: Mai, Georg, 96215 Lichtenfels/Ofr. (DE)
(74) Vertreter: Hafner, Dieter

(56) Entgegenhaltungen:
- WO-A-03/011550
- WO-A-2007/028702
- DE-A1- 10 042 132
- DE-A1-102004 006 441
- US-A- 5 849 238
- US-B1- 6 354 361
- US-B1- 6 391 251
- US-B1- 6 936 206
- MAI G: "WEG VOM KUEHLKANAL" PLASTVERARBEITER, HUETHIG GMBH, HEIDELBERG, DE, Februar 2006 (2006-02), Seiten 72-73, XP008063064 ISSN: 0032-1338
- KOCH M: "KONZEPTE FUER DIE WERKZEUGTEMPERIERUNG EINE UEBERSICHT MIT ERFAHRUNGEN AUS DER PRAXIS" KUNSTSTOFFE, CARL HANSER VERLAG, MUNCHEN, DE, Bd. 92, Nr. 11, November 2002 (2002-11), Seiten 28-36, XP001121639 ISSN: 0023-5563
- SACHS E ET AL: "PRODUCTION OF INJECTION MOLDING TOOLING WITH CONFORMAL COOLING CHANNELS USING THE THREE DIMENSIONAL PRINTING PROCESS" POLYMER ENGINEERING & SCIENCE, WILEY, HOBOKEN, NJ, US, Bd. 40, Nr. 5, Mai 2000 (2000-05), Seiten 1232-1247, XP000969782 ISSN: 0032-3888
- MOSINGER H: "NEUE WEGE ZUM ENTWURF DER THERMISCH OPTIMALEN BLASFORM" KUNSTSTOFFBERATER, KUNSTSTOFF VERLAG. ISERNHAGEN, DE, Bd. 33, Nr. 7/8, 1. Juli 1988 (1988-07-01), Seiten 52-56, XP000027596 ISSN: 0172-6374
- MENGES, GEORG ET AL: "How to make injection molds" 2000, CARL HANSER VERLAG , MUNICH , XP002449013 * Seite 300 - Seite 307 * * Seite 312 - Seite 316 * * Seite 331 *

## Beschreibung

Die Erfindung/Neuerung betrifft einen gekühlten Formstift oder Kernstift für Spritzwerkzeuge sowie eine Spritzmaschine, mit den Merkmalen des Oberbegriffs des Anspruchs 1.

Formstifte oder Kernstifte für Spritzwerkzeuge sind in unterschiedlichen Ausführungsformen bekannt. Insbesondere gehören auch Form- oder Kernstifte zum Stand der Technik, die geeignet sind, in Formlingen entweder Durchgangslöcher oder sacklochartige Ausnehmungen, insbesondere Schraubdome einzuformen. Diese Formstifte oder Kernstifte weisen einen langgestreckten Formkörperabschnitt mit einem im wesentlichen runden Querschnitt und einen daran angrenzenden Kopf- oder Schaftteil auf, wobei in dem Formkörperabschnitt Maßnahmen zur Wärmeabfuhr vorgesehen sind. Aus einem Prospektblatt "Hasco Kernstifte" ist es bekannt, die Kernstifte aus berylliumfreier Spezialkupferlegierung herzustellen, um die Wärme aus den Kernstiften und ihrem Umgebungsbereichabzuführen (www. kunststoffweb.de/neueprodukte/detail.asp?tid=101864).

Aus DE 102 56 036 A1 ist es grundsätzlich bekannt, eine Spritzwerkzeugkühlung durch eine Gaskühlung, nämlich Kohlendioxid-expansionskühlung vorzunehmen.

Aus DE 199 18 428 C1 ist ein Verfahren bekannt, Werkzeugbereiche mit zu hohen Temperaturen gezielt zu kühlen, auch bei diesem Verfahren wird als Kühlmittel Kohlendioxid eingesetzt.

Aus US 6 391 251 B1 ist ein Verfahren sowie eine Vorrichtung zum generativen Aufbau von SLS-Objekten bekannt, wobei auch Objekte mit rundem Querschnitt und inneren Kühlkanalstrukturen gefertigt werden können.

Aus US 5849231 B1 ist ein gekühlter Kern für Spritzwerkzeuge bekannt.

Aus der Publikation Mai G.: "Weg vom Kühlkanal", Plastverarbeiter, Huethig Gmbh, Heidelberg, DE, Februar 2006 (2006-02), Seite 72 - 73, XP 0080 63064, ISSN: 0032-1338 ist es bekannt, bei der Herstellung von Spritzgießwerkzeugen, ein sogenanntes Laser-Cusing-Verfahren anzuwenden und dabei durch schichtweises Aufschmelzen von Metallpulver Kühlkanäle in jeder beliebigen Lage und Form zu fertigen. Dabei wird eine Kühlfläche in einem Abstand von 2 mm zur Formteiloberfläche ausgebildet

Der Erfindung/Neuerung liegt die Aufgabe zugrunde, einen gekühlten Formeinsatz für Sptitzwerkzeuge, insbesondere einen Form- oder Kernstift, derart auszubilden, daß eine effektive Wärmeabfuhr auch aus sehr engen Bereichen des Kernstiftes möglich und der Formstift für unterschiedliche Formlängen verwendbar ist. Diese Aufgabe wird dadurch gelöst, daß der Formstift oder Kernstift durch ein in einem generativen Verfahren durch Auf- oder Anschmelzen verfestigtes metallisches Pulvermaterial gebildet ist und wenigstens in dem Formkörperabschnitt mindestens ein Gaskühlkanal mit engem Abstand hinter der Außenwandung angeordnet ist, der bei unrundem Querschnitt einen kleinsten lichten Abstand sich gegenüberliegender Innenwandungen von ≤ 1 mm aufweist, wobei ein Endbereich des Formkörperabschnitts bezogen auf seine Außendurchmesser als nachbearbeitbarer Bereich ausgebildet ist, indem der Abstand (A2) der Außenkontur (5) des/der Kühlkanäl(e) (4) von der Außenwandung (6) des Formkörperabschnittes (2) in einem Endbereich (7) des Formkörperabschnittes (2) größer ist als der Abstand (A1) in eines dem Kopf- oder Schaftteil (3) zugewandten Abschnitt und/oder der Abstand (A2) der Außenkontur (5) des/der Kühlkanäl(e) (4) von der Außenwandung, (6) des Formkörperabschnittes (2) in einem Mittelbereich (11) des Formkörperabschnittes (2) größer ist als der Abstand (A3) in einem dem Stiftende zugewandten Fußbereich (12).

Die Erfindung/Neuerung beruht auf der Erkenntnis, daß extrem filegrane Kühlkanäle in Formstiften angeordnet werden können, die durch ein Laserschmelzverfahren hergestellt werden. Diese Gaskühlkanäle können sich unmittelbar hinter den Wandungen der Formstifte oder Kernstifte erstrecken und sind damit geeignet, gezielt und effizient Wärme aus kritischen Bereichen abzuleiten, wodurch das Spritzergebnis im Bereich des Formstiftes erheblich verbessert wird.

Ein weiterer Kern der Erfindung ist, dass der Formkörperabschnitt bezogen auf seinen Außendurchmesser als nacharbeitbarerer Bereich ausgebildet. Um den Endbereich des Formkörperabschnittes nachbearbeitbar zu gestalten, kann der Abstand der Außenkontur des oder der Kühlkanäle von der Außenwandung des Formkörperabschnittes in dem Endbereich des Formkörperabschnittes größer sein als der Abstand in einem dem Kopfbereich zugewandten Abschnitt. Dadurch kann eine wirtschaftlich günstige Produktion eines Formstiftes erreicht werden, da mit einem Stift unterschiedliche Formlängen abgedeckt werden. So kann der erfindungsgemäße Formstift auf die vorgesehene Länge gedreht werden.

Dieser wirtschaftliche Nutzen läßt sich weiter steigern, indem werksseitig eine erste Abstufung/Abdrehung vorgesehen wird, bei der der Abstand der Außenkontur des/der Kühlkanäl(e) von der Außenwandung des Formkörperabschnittes in einem Mittelbereich des Formkörperabschnittes größer ist als der Abstand in einem dem Stiftende zugewandten Fußbereich. So kann ein Formstift gefertigt werden der gebrauchsfertig auf eine bestimmte Länge ausgelegt ist, dieser kann aber im Bedarfsfall abgedreht werden und damit weitere Verwendungslängen abdecken.

Bedarfsweise können die Kühlkanäle mit unterschiedlichen Querschnitten in fast beliebigen Anordnungen im Innenbereich des Formstifts angeordnet werden und sind damit geeignet, aus besonders kritischen Abschnitten des Formstiftes gezielt Wärme abzuführen. Werden Spezialkupferlegierungen versintert oder in einem generativen Verfahren zu Formstiften verschmolzen und in die Formstifte aus diesem Material zusätzlich Kühlkanäle gelegt, dann ist eine hocheffiziente Wärmeabfuhr aus schlanken Formstiftbereichen sicher gestellt.

In Weiterbildung der Erfindung können die Formstifte in dem Formkörperabschnitt spiralig oder mit einer helikalen Struktur angeordnet werden, d.h. sie können hinter den Außenflächen des Formstiftes eng anliegend angeordnet werden und führen aufgrund ihrer engen Beabstandung zu den Außenwänden effizient Wärme ab. Für eine gleichmäßige Kühlung des Formstiftes hat es sich bei Tests als vorteilhaft erwiesen, die Kühlkanäle bezogen auf den Querschnitt des Formkörperabschnittes symmetrisch anzuordnen.

Wenn die Kühlkanäle einen ovalen Querschnitt aufweisen, dessen Außenkontur einem Kreis angenähert ist und von der Außenwandung der Formkörperabschnitt im wesentlichen einen konstanten Abstand einhält, ist die Wärmeabfuhr noch weiter verbessert.

In vorteilhafter Weiterbildung kann der Einlaß des oder der Gaskühlkanäle in einem stirnseitigen Abschnitt des Kopfteils angeordnet werden. Der Auslaß der Gaskühlkanäle hingegen ist relativ unkritisch und kann in einem Seitenwandungsabschnitt des Formeinsatzes vorgesehen sein.

Mehrere Kühlkanäle können zu einer weiteren Vergleichmäßigung der Kühlung in dem Formstift führen, diese können durch Querverbindungskanäle ineinander übergehen, die bezogen auf die Längserstreckungsrichtung des Formkörperabschnittes radial zueinander verdreht sind, um wiederum die Kühlung des Formkörperabschnittes zu vergleichmäßigen.

Wenn die Querverbindungskanäle einen Querschnitt haben, der etwas geringer ist als der Querschnitt eines Sammelkanals, in welchen sie stromabwärts einmünden, ist es möglich, auch eine Expansionskühlung innerhalb des Formstiftes zu betreiben.

In vorteilhafter Weise wird in dem generativen Verfahren zur Fertigung eines Formstiftes Kupfermaterial verwendet, insbesondere berylliumfreies Kupfermaterial. Mit dieser Werkstoffwahl werden die Wärmeleiteigenschaften des Formstiftes positiv beeinflusst, sodaß der Wärmetransport von den Kühlkanälen zu der Formstiftaußenfläche begünstigt wird.

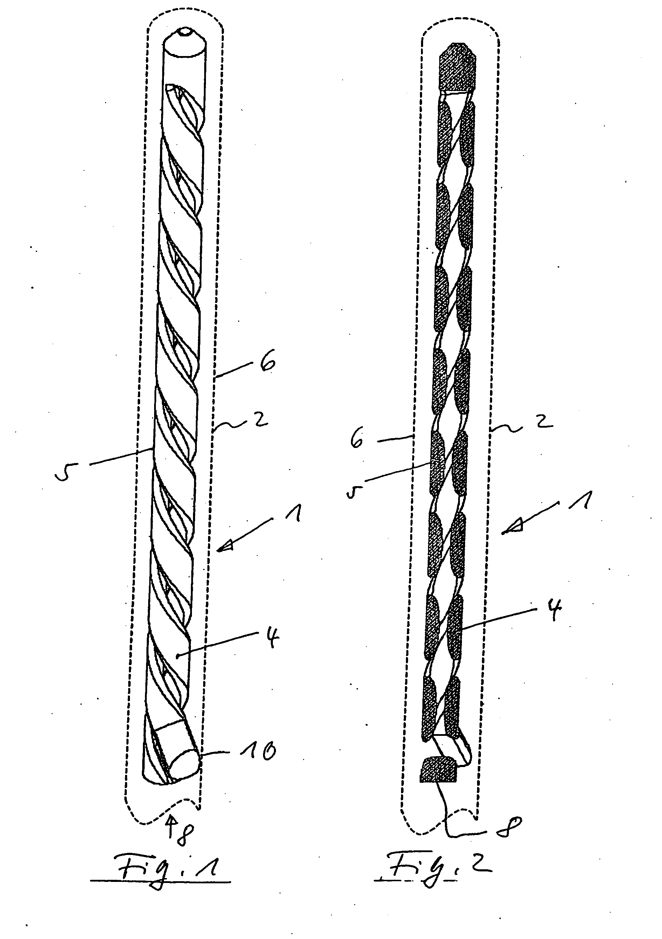

Die Erfindung ist anhand vorteilhafter Ausführungsbeispiele in den Zeichnungsfiguren näher erläutert. Diese zeigen
- Fig. 1: Gaskühlkanäle in einem Formstift, dessen Außenkontur nur angedeutet ist;
- Fig. 2: eine Schnittdarstellung durch die Gaskühlkanäle gem. Fig. 1;

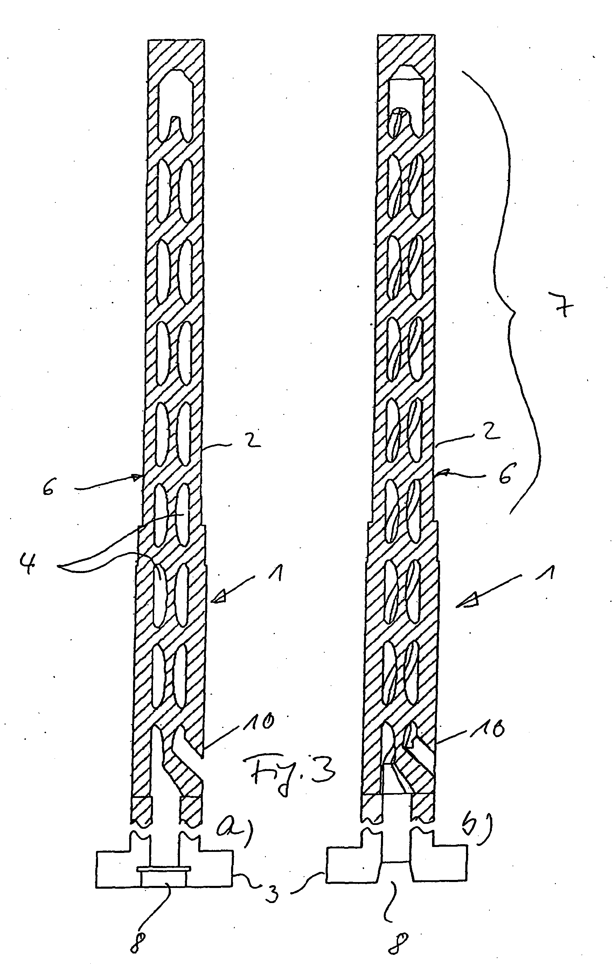

- Fig. 3: ein Schnitt durch einen Formstift mit einem schematisch angedeuteten Kopf, wobei Fig. 3a ohne Hintergrundlinien und Fig. 3b mit Hintergrundlinien ausgeführt ist;
- Fig. 4: einen Querschnitt durch einen Formstift;
- Fig. 5: einen weiteren Querschnitt durch einen Formstift in zwei übereinandergelegten Ebenen, um die radiale Verdrehung der Querverbindungskanäle in den spiralig angeordneten Kanälen zu verdeutlichen;

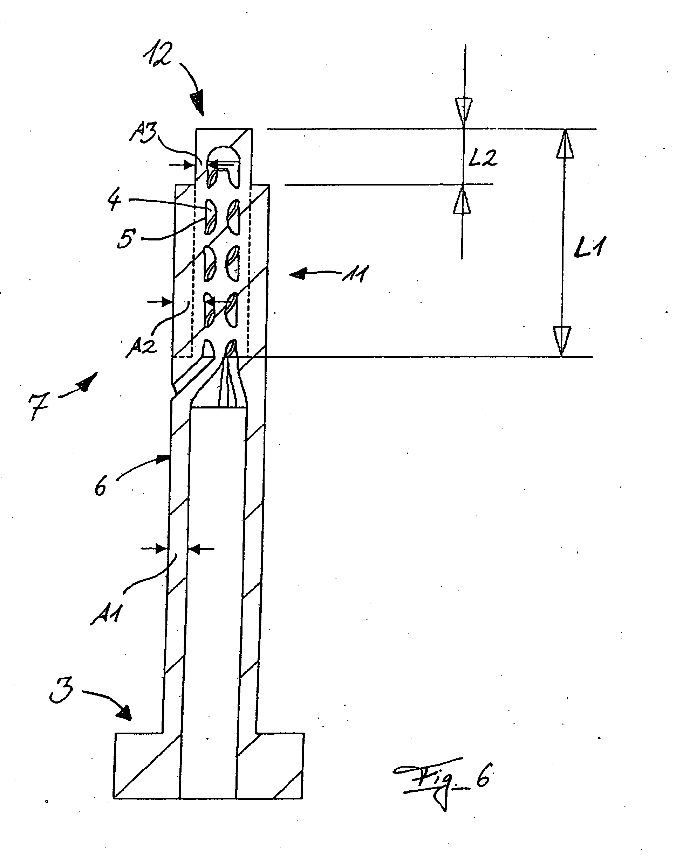

- Fig. 6: einen Querschnitt durch einen Formstift mit unterschiedlichen Abständen zwischen Außenkontur des Kühlkanals und der Außenwandung des Formkörperabschnitts.

Der gekühlte Formeinsatz für Spritzwerkzeuge ist ein Formstift 1, der einen langgestreckten Formkörperabschnitt 2 mit im wesentlichen runden Querschnitt und ein daran angrenzendes Kopfteil 3 aufweist. In dem Formkörperabschnitt 2 sind Maßnahmen zur Wärmeabfuhr getroffen.

Der Formeinsatz ist zumindest bereichsweise durch ein in einem generativen Verfahren durch Auf- oder Anschmelzen verfestigtes metallisches Pulvermaterial gebildet, in dem Formkörperabschnitt 2 ist mindestens ein Gaskühlkanal 4 mit engem Abstand hinter der Außenwandung 6 angeordnet, der bei unrundem Querschnitt einen kleinsten lichten Abstand sich gegenüberliegender Innenwandungen von weniger als oder gleich 1 mm aufweist.

Der mindestens eine Kühlkanal 4 in dem Formkörperabschnitt 2 ist spiralig oder mit einer helikalen Struktur angeordnet, so daß seine Strömungslänge weit länger ist als die Länge des von ihm durchsetzten Abschnittes des Formeinsatzes. Der bzw. die Gaskühlkanäle 4 ist/sind bezogen auf den Querschnitt des Formkörperabschnittes 2 symmetrisch angeordnet, d.h. ein spiralig in den Formkörperabschnitt 2 hineinlaufender Gaskühlkanal 4 weist einen Hin- und einen Rückströmungsabschnitt auf, wobei sich die Querschnitte der beiden Abschnitte symmetrisch gegenüberliegen.

Der oder die Kühlkanäle 4 haben einen ovalen Querschnitt, der in den Zeichnungsfiguren 4 und 5 etwa nierenförmig dargestellt ist. Die Außenkontur 5 des Gaskühlkanals 4 ist dabei einem Kreis angenähert und weist von der Außenwandung 6 des Formkörperabschnittes 2 im wesentlichen einen konstanten Abstand "D" auf.

Um den Endbereich des Formkörperabschnittes 2 nacharbeitbar zu gestalten, kann der Abstand A2 der Außenkontur 5 des/der Kühlkanäl(e) 4 von der Außenwandung 6 des Formkörperabschnittes 2 in einem Endbereich 7 des Formkörperabschnittes 2 größer sein als der Abstand A1 in einem dem Kopf- oder Schaftteil 3 zugewandten Abschnitt. Dies geht aus Zeichnungsfigur 6 hervor, hier ist eine weiterführende Ausführung mit einer werksseitigen Erstabstufung dargestellt in der der Abstand A2 der Außenkontur 5 des/der Kühlkanäl(e) 4 von der Außenwandung 6 des Formkörperabschnittes 2 in einem Mittelbereich 11 des Formkörperabschnittes 2 größer ist als der Abstand A3 in einem dem Stiftende zugewandten Fußbereich 12. In der Zeichnungsfigur 6 ist ein Stift mit vorgesehener werksseitiger Verwendungslänge L2 dargestellt, dieser ist durch Nachbearbeitung beliebig bis auf eine maximale Verwendungslänge L1 verwendbar.

Der Einlaß 8 des oder der Gaskühlkanäle 4 ist in einem stirnseitigen Abschnitt 9 des Kopfes 3 angeordnet, ein Auslaß des oder der Gaskühlkanäle kann in einem Seitenwandungsabschnitt 10 liegen.

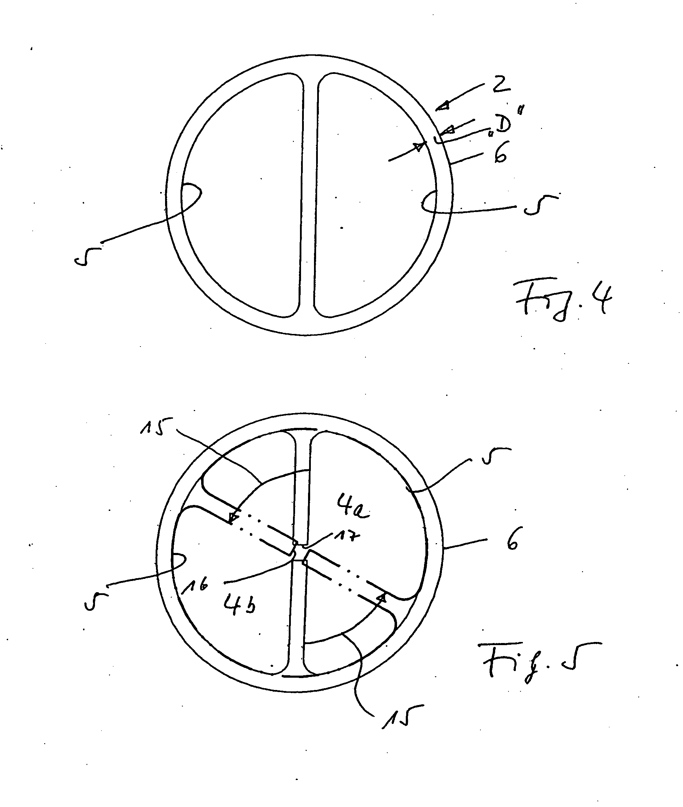

Grundsätzlich ist es möglich, mehrere ineinander verschraubte Kühlkanäle 4 in dem Formeinsatz anzuordnen und durch Querverbindungskanäle ineinander übergehen zu lassen, wie dies in Fig. 5 dargestellt ist. In Fig. 5 sind zwei Schnittebenen übereinander gelegt, so daß der helikale Versatz der Kühlkanäle 4a und 4b zu sehen ist, wobei die helikale Verdrehung durch Pfeile 15 angedeutet ist. Die zwischen den Kühlkanälen 4 angeordneten Querverbindungskanäle 16, 17 sind ebenfalls angedeutet.

Wenn der Kanal 4a mit dem Einlaß 8 verbunden ist, dann dient der Kanal 4b als Sammelkanal für die Querverbindungskanäle 16, 17, in welchen sie stromabwärts einmünden. Mit einer derartigen Anordnung ist prinzipiell eine Expansionskühlung möglich.

## Patentansprüche

1. Gekühlter Formstift (1) oder Kernstift für Spritzwerkzeuge zur Bildung von Durchgangslöchern oder sacklochartigen Ausnehmungen, insbesondere Schraubdomen, in einem Formling, wobei der Formstift einen langgestreckten Formkörperabschnitt (2) mit einem im wesentlichen runden Querschnitt und ein daran angrenzendes Schaft- und/oder Kopfteil (3) aufweist und in dem Formkörperabschnitt (2) Maßnahmen zur Wärmeabfuhr getroffen sind,
**dadurch gekennzeichnet, daß**
der Formstift oder Kernstift zumindest bereichsweise durch ein in einem generativen Verfahren durch Auf- oder Anschmelzen verfestigtes metallisches Pulvermaterial gebildet ist und wenigstens in dem Formkörperabschnitt (2) mit engem Abstand hinter der Außenwandung (6) mindestens ein Gaskühlkanal (4) angeordnet ist, der bei unrundem Querschnitt einen kleinsten lichten Abstand sich gegenüberliegender Innenwandungen von ≤ 1mm aufweist, wobei ein Endbereich des Formkörperabschnittes (2) bezogen auf seine Außendurchmesser als nachbearbeitbarer Bereich ausgebildet ist, indem der Abstand (A2) der Außenkontur (5) des/der Kühlkanäl(e) (4) von der Außenwandung (6) des Formkörperabschnittes (2) in einem Endbereich (7) des Formkörperabschnittes (2) größer ist als der Abstand (A1) in einem dem Knopf- oder Schaftteil (3) zugewandten Abschnitt und/oder der Abstand (A2) der Außenkontur (5) des/der Kühlkanäl(e) (4) von der Außenwandung (6) des Formkörperabschnittes (2) in einem Mittelbereich (11) des Formkörperabschnittes (2) größer ist als der Abstand (A3) in einem dem Stiftende zugewandten Fußbereich (12).

2. Formstift oder Kernstift nach Anspruch 1,
**dadurch gekennzeichnet, daß**
der mindestens eine Kühlkanal (4) in dem Formkörperabschnitt (2) spiralig oder mit einer helikalen Struktur angeordnet ist.

3. Formstift oder Kernstift nach Anspruch 1 oder 2,
**dadurch gekennzeichnet, daß**
der/die Kühlkanäl(e) (4) bezogen auf den Querschnitt des Formkörperabschnittes (2) symmetrisch angeordnet sind.

4. Formstift oder Kernstift nach einem der Ansprüche 1 - 3,
**dadurch gekennzeichnet, daß**
der/die Gaskühlkanäl(e) (4) einen ovalen Querschnitt aufweisen.

5. Formstift oder Kernstift nach einem der vorhergehenden Ansprüche,
**dadurch gekennzeichnet, daß**
ein Einlaß (8) des/der Gaskühlkanäle (4) in einem stirnseitigen Abschnitt des Kopfteils (3) angeordnet ist.

6. Formstift oder Kernstift nach einem der vorhergehenden Ansprüche,
**dadurch gekennzeichnet, daß**
ein Auslaß des/der Gaskühlkanäle (4) in einem Seitenwandungsabschnitt (10) des Formeinsatzes angeordnet ist.

7. Formstift oder Kernstift nach einem der vorhergehenden Ansprüche,
**dadurch gekennzeichnet, daß**
mehrere Kühlkanäle (4a, 4b) in dem Formeinsatz angeordnet sind.

8. Formstift oder Kernstift nach einem der vorhergehenden Ansprüche,
**dadurch gekennzeichnet, daß**
die Kühlkanäle (4a, 4b) durch Querverbindungskanäle (16, 17) ineinander übergehen.

9. Formstift oder Kernstift nach einem der vorhergehenden Ansprüche,
**dadurch gekennzeichnet, daß** die Querverbindungskanäle (16, 17) bezogen auf die Längserstreckungsrichtung des Formkörperabschnittes (2) radial zueinander verdreht sind.

10. Formstift oder Kernstift nach einem der vorhergehenden Ansprüche,
**dadurch gekennzeichnet, daß**
an den Einlaß (8) des/der Gaskühlkanäle (4) ein unter Überdruck stehendes Stickstoff-, Luft- oder Kohlendioxidreservoir angeschlossen ist

11. Formstift oder Kernstift nach einem der vorhergehenden Ansprüche,
**dadurch gekennzeichnet, daß**
sich die Dichte der Gaskühlkanäle (4) in Längserstreckungsrichtung des Formkörperabschnittes (2) ändert.

12. Formstift oder Kernstift nach einem der vorhergehenden Ansprüche,
**dadurch gekennzeichnet, daß**
sich der Querschnitt des oder der Gaskühlkanäle (4) in Längserstreckungsrichtung des Formkörperabschnittes (2) ändert.

13. Formstift oder Kernstift nach einem der vorhergehenden Ansprüche,
**dadurch gekennzeichnet, daß**
die Querverbindungskanäle (16, 17) einen Querschnitt haben, der geringer ist als der Querschnitt eines Sammelkanals (4b), in welchen sie stromabwärts einmünden.

14. Formstift oder Kernstift nach einem der vorhergehenden Ansprüche,
**dadurch gekennzeichnet, daß**
der Formstift (1) aus einer Kupferlegierung, insbesondere aus einem berylliumfreien Kupfermaterial besteht.

15. Formstift oder kernstift nach Anspruch 1,
**dadurch gekennzeichnet, daß**
der Formstift (1) Teil einer, in einer Spritzmaschine eingebauten Spritzform ist wobei der Gaskühlkanal (4) des Formstifts (1) an einem der Spritzmaschine zugeordneten Druckluftanschluss einer Kompressoreinheit zur Erzeugung von Druckluft, angeschlossen ist.

## Claims

1. Cooled mould pin (1) or core pin for injection moulds for forming through-holes or recesses similar to blind holes, in particular screw domes, in a moulding, the mould pin having an elongated mould body portion (2) with a substantially round cross section and an adjoining shaft and/or head part (3), and heat removal measures having been taken in the mould body portion (2),
**characterized in that**
the mould pin or core pin is formed at least in certain regions by a solidified metallic powder material being melted or partially melted, and a gas cooling channel (4) is arranged at least in the mould body portion (2) at a small distance behind the outer wall (6) and, with an unround cross section, has a smallest clear distance between opposing inner walls of ≤ 1 mm, wherein an end region of the mould body portion (2) is formed as a re-workable region with respect to its outside diameter by the distance (A2) of the outer contour (5) of the cooling channel (s) (4) from the outer wall (6) of the mould body portion (2) in an end region (7) of the mould body portion (2) being greater than the distance (A1) in a portion towards the head or shaft part (3) and/or the distance (A2) of the outer contour (5) of the cooling channel(s) (4) from the outer wall (6) of the mould body portion (2) in a middle region (11) of the mould body portion (2) being greater than the distance (A3) in a foot region (12) towards the end of the pin.

2. Mould pin or core pin according to Claim 1,
**characterized in that**
the at least one cooling channel (4) is arranged spirally or with a helical structure in the mould body portion (2).

3. Mould pin or core pin according to Claim 1 or 2,
**characterized in that**
the cooling channel(s) (4) is/are arranged symmetrically with respect to the cross section of the mould body portion (2).

4. Mould pin or core pin according to one of Claims 1-3,
**characterized in that**
the gas cooling channel(s) (4) has/have an oval cross section.

5. Mould pin or core pin according to one of the preceding claims,
**characterized in that**
an inlet (8) of the gas cooling channel (s) (4) is arranged in an end portion of the head part (3).

6. Mould pin or core pin according to one of the preceding claims,
**characterized in that**
an outlet of the gas cooling channel(s) (4) is arranged in a side wall portion (10) of the mould insert.

7. Mould pin or core pin according to one of the preceding claims,
**characterized in that**
a number of cooling channels (4a, 4b) are arranged in the mould insert.

8. Mould pin or mould core according to one of the preceding claims,
**characterized in that**
the cooling channels (4a, 4b) go over into one another by transverse connecting channels (16, 17).

9. Mould pin or core pin according to one of the preceding claims,
**characterized in that**
the transverse connecting channels (16, 17) are rotated radially in relation to one another with respect to the direction of longitudinal extent of the mould body portion (2).

10. Mould pin or core pin according to one of the preceding claims,
**characterized in that**
a pressurized nitrogen, air or carbon dioxide reservoir is connected to the inlet (8) of the gas cooling channel(s) (4).

11. Mould pin or core pin according to one of the preceding claims,
**characterized in that**
the density of the gas cooling channels (4) changes in the direction of longitudinal extent of the mould body portion (2).

12. Mould pin or core pin according to one of the preceding claims,
**characterized in that**
the cross section of the gas cooling channel or channels (4) changes in the direction of longitudinal extent of the mould body portion (2).

13. Mould pin or core pin according to one of the preceding claims,
**characterized in that**
the transverse connecting channels (16, 17) have a cross section which is smaller than the cross section of a collecting channel (4b), which they enter downstream.

14. Mould pin or core pin according to one of the preceding claims,
**characterized in that**
the mould pin (1) consists of a copper alloy, in particular of a beryllium-free copper material.

15. Mould pin or core pin according to Claim 1,
**characterized in that**
the mould pin (1) is part of an injection mould installed in an injection-moulding machine, wherein the gas cooling channel (4) of the mould pin (1) is connected to a compressed-air connection of a compressor unit for generating compressed air that is assigned to the injection-moulding machine.

## Revendications

1. Tige refroidie (1) pour moule ou tige d'âme pour outil d'injection, destinée à former dans une ébauche des trous de passage ou des découpes aveugles, en particulier des dômes filetés,
la tige pour moule présentant une partie allongée (2) en corps moulé de section transversale essentiellement circulaire et une partie de tige ou de tête (3) qui y est adjacente, des dispositions d'évacuation de chaleur étant prises dans la partie (2) de corps moulé,
**caractérisée en ce que**
au moins certaines parties de la tige pour moule ou de la tige d'âme sont formées par un procédé de formation qui utilise la fusion d'un matériau métallique pulvérulent durci,
**en ce qu'**au moins un canal (4) de refroidissement à gaz qui présente entre les parois intérieures opposées une plus petite distance ≤ 1 mm lorsque la section transversale n'est pas circulaire est disposé au moins dans la partie (2) en corps moulé à courte distance en retrait de la paroi extérieure (6),
**en ce que** dans une partie d'extrémité (7) de la partie (2) en corps moulé, une partie d'extrémité de la partie (2) en corps moulé a un diamètre extérieur de partie apte à recevoir un traitement de finition par le fait que la distance (A2) entre le contour extérieur (5) du ou des canaux de refroidissement (4) et la paroi extérieure (6) de la partie (2) en corps moulé est supérieure à la distance (A1) dans une partie tournée vers la partie de tête ou de tige (3) et/ou
**en ce que** dans une partie centrale (11) de la partie (2) en corps moulé, la distance (A2) entre le contour extérieur (5) du ou des canaux de refroidissement (4) et la paroi extérieure (6) de la partie (2) en corps moulé est supérieure à la distance (A3) dans une partie de pied (12) tournée vers l'extrémité de la tige.

2. Tige refroidie pour moule ou tige d'âme selon la revendication 1, **caractérisée en ce que** le ou les canaux de refroidissement (4) sont disposés en spirale ou avec une structure en hélice dans la partie (2) en corps moulé.

3. Tige refroidie pour moule ou tige d'âme selon les revendications 1 ou 2, **caractérisée en ce que** le ou les canaux de refroidissement (4) sont disposés symétriquement par rapport à la section transversale de la partie (2) en corps moulé.

4. Tige refroidie pour moule ou tige d'âme selon l'une des revendications 1 à 3, **caractérisée en ce que** le ou les canaux (4) à gaz de refroidissement ont une section transversale ovale.

5. Tige refroidie pour moule ou tige d'âme selon l'une des revendications précédentes, **caractérisée en ce qu'**une entrée (8) du ou des canaux (4) à gaz de refroidissement est disposée dans une partie frontale de la partie de tête (3).

6. Tige refroidie pour moule ou tige d'âme selon l'une des revendications précédentes, **caractérisée en ce qu'**une sortie du ou des canaux (4) à gaz de refroidissement est disposée dans une partie de paroi latérale (10) de la garniture de moule.

7. Tige refroidie pour moule ou tige d'âme selon l'une des revendications précédentes, **caractérisée en ce que** plusieurs canaux de refroidissement (4a, 4b) sont disposés dans la garniture de moule.

8. Tige refroidie pour moule ou tige d'âme selon l'une des revendications précédentes, **caractérisée en ce que** les canaux de refroidissement (4a, 4b) se raccordent les uns aux autres par des canaux transversaux de liaison (16, 17).

9. Tige refroidie pour moule ou tige d'âme selon l'une des revendications précédentes, **caractérisée en ce que** les canaux transversaux de liaison (16, 17) sont tournés radialement les uns par rapport aux autres suivant la longueur de la partie (2) en corps moulé.

10. Tige refroidie pour moule ou tige d'âme selon l'une des revendications précédentes, **caractérisée en ce qu'**un réservoir d'azote, d'air ou de dioxyde de carbone placé sous pression est raccordé à l'entrée (8) du ou des canaux (4) à gaz de refroidissement.

11. Tige refroidie pour moule ou tige d'âme selon l'une des revendications précédentes, **caractérisée en ce que** la densité des canaux (4) à gaz de refroidissement se modifie dans le sens de la longueur de la partie (2) en corps moulé.

12. Tige refroidie pour moule ou tige d'âme selon l'une des revendications précédentes, **caractérisée en ce que** la section transversale du ou des canaux (4) de refroidissement à gaz se modifie suivant la longueur de la partie (2) en corps moulé.

13. Tige refroidie pour moule ou tige d'âme selon l'une des revendications précédentes, **caractérisée en ce que** les canaux transversaux de liaison (16, 17) ont une section transversale plus petite que la section transversale d'un canal de collecte (4b) dans lequel ils débouchent en aval.

14. Tige refroidie pour moule ou tige d'âme selon l'une des revendications précédentes, **caractérisée en ce que** la tige (1) pour moule est constituée d'un alliage de cuivre et en particulier d'un matériau à base de cuivre mais exempt de bérylium.

15. Tige refroidie pour moule ou tige d'âme selon la revendication 1, **caractérisée en ce que** la tige (1) pour moule fait partie d'un moule d'injection monté dans une machine d'injection, le canal (4) à gaz de refroidissement de la tige pour moule (1) étant raccordé à un raccordement d'air sous pression, associé à la machine d'injection, d'une unité de compresseur servant à produire de l'air comprimé.
